Europäisches Patentamt

(19) European Patent Office

Office européen des brevets

(11) Publication number: **0 085 560**
A1

(12) **EUROPEAN PATENT APPLICATION**

(21) Application number: **83300471.6**

(22) Date of filing: **28.01.83**

(51) Int. Cl.³: **B 08 B 3/08**
C 23 G 5/02, C 09 D 9/00

(30) Priority: **28.01.82 GB 8202393**

(43) Date of publication of application:
**10.08.83 Bulletin 83/32**

(84) Designated Contracting States:
**AT BE CH DE FR GB IT LI LU NL SE**

(71) Applicant: **Diamond Shamrock Europe Limited**
**Peel House Monton Road**
**Eccles Manchester, M30 0NA(GB)**

(72) Inventor: **Treacher, Sydney**
**3 Coolgardie Avenue**
**Chigwell Essex(GB)**

(74) Representative: **Hardisty, David Robert et al,**
**BOULT, WADE & TENNANT 27 Furnival street**
**London EC4A IPQ(GB)**

(54) **Process and apparatus for cleaning soiled articles.**

(57) A process is provided for cleaning soil from articles, e.g. printing inks from printing machine parts, which comprises spraying the articles with a hot liquid comprising a mixture of methylene chloride and methanol having a methanol content of 13% to 23% by weight whilst providing an atmosphere around the articles of a non-inflammable vapour having a methylene chloride content greater than that of the spray liquid.

Apparatus for use in the method comprises a cleaning chamber (1), a first reservoir (9) in which liquid is heated to produce vapour which fills chamber (1), and a heated sump (9) at the base of chamber (1) from which cleaning liquid is pumped to a spray manifold (8) in chamber (1) by pump (11).

*FIG. 1.*

EP 0 085 560 A1

## PROCESS AND APPARATUS FOR

## CLEANING SOILED ARTICLES

The present invention relates to a process and apparatus for cleaning soiled articles e.g. printing ink from parts of printing machines.

Many industrial soils pose a very serious cleaning problem. Many soils are conventionally removed by the use of volatile inflammable organic solvents such as acetone. For instance, it is conventional at present to clean parts of printing machinery contaminated with printing ink by a prolonged treatment with high pressure acetone sprays in specially constructed rooms adapted to contain the very considerable fire risk.

Similarly, such printing machine parts may be hand-cleaned by immersing them for long periods in baths of acetone or methyl ethyl ketone or similar solvents. Such processes are undesirable in that they expose workers to very unpleasant and possibly dangerous conditions.

Modern printing inks contain many natural or synthetic resin materials which make them very difficult to clean from machine parts and as the speed of printing machines increases, the cleaning of the machines is becoming the step in the printing process which limits the speed of the whole printing operation.

There are of course many other fields in which generally similar cleaning problems arise, for instance in the removal of paint from articles.

The present invention now provides a process for cleaning soil from articles which process comprises spraying the articles with a hot liquid comprising a mixture of methylene chloride and methyl alcohol having a methyl alcohol content of from 13% to 23% by weight whilst providing an atmosphere around the said articles of a non-inflammable vapour having a methylene chloride content greater than that of the spray liquid.

Preferably the atmosphere of vapour is generated from a first reservoir of liquid and the spray liquid is supplied from a second reservoir of liquid.

The first reservoir may contain methylene chloride or a mixture of methylene chloride and methanol containing at least 92% by weight of methylene chloride. That is to say, the contents of the first reservoir should preferably be such that upon boiling they generate a vapour which is either vapour of the composition of the azeotrope of methylene chloride and methanol or else vapour more rich than that in methylene chloride.

The sprayed liquid preferably falls into a sump below the articles and is recirculated from the sump to be further sprayed on to the articles.

Where in such an arrangement there is provision of a separate reservoir of liquid to provide the vapour the liquid in the sump is preferably maintained hot but not boiling.

The most vigorous cleaning action is achieved using a high temperature and a vigorous spray. Whilst in general a higher spray pressure will produce a more vigorous spray, the optimum spray pressure and temperature are related. Energy is added to the cleaning liquid by the pump that drives the spray, also the liquid suffers a drop in pressure on leaving the spray nozzles used. If the spray pressure is made too great given the temperature of the liquid, then the liquid tends to vapourise as it is sprayed and the spray becomes less vigorous rather than more vigorous. Equally, if at a given spray pressure the liquid temperature is increased excessively the same result is obtained.

The cleaning efficiency may be greatly reduced if the temperature and spray pressure used are too low or too high having regard to the spraying apparatus used. Generally, good results will be obtained using a temperature of from 20 to 37$^O$C more preferably 25 to 35$^O$C and spray pressures of 689 to 138 KPa (100 to 20 psi) more preferably 414 to 212 KPa (60 to 30 psi).

Preferably, the liquid sprayed onto the articles comprises a mixture of methylene chloride and methanol containing 14 to 20%, more preferably from 14 to 17%, by weight of methanol.

A particularly preferred combination of conditions is a pressure of from 310 KPa (45 psi) to 241 KPa (35 psi), a temperature of 30 to 35°C and a methanol content of from 14 to 17% by weight.

The invention also provides apparatus for cleaning soil from articles which apparatus comprises a cleaning chamber communicating with a first reservoir for liquid, means for heating liquid in the reservoir to produce vapour in the cleaning chamber, means for supporting articles to be cleaned in the chamber, means for spraying liquid onto articles so supported, a second reservoir for liquid to be sprayed operatively connected to the said means for spraying, and means for heating the liquid which is sprayed.

Preferably, the means for heating the liquid which is sprayed is a heater operative on the liquid in the second reservoir. However, if high enough spray pressures are used, sufficient heat may be imparted to the liquid by the spraying operation itself so that the source of spraying pressure then constitutes the means for heating the liquid which is sprayed.

- 5 -

The invention will be illustrated by the following description of a preferred embodiment with reference to the accompanying drawings in which:-

Figure 1 is a perspective schematic view of an apparatus according to the invention,

Figure 2 is a section on the line 2-2 of Figure 1, and

Figure 3 is a section through a still used in conjunction with the apparatus of Figures 1 and 2.

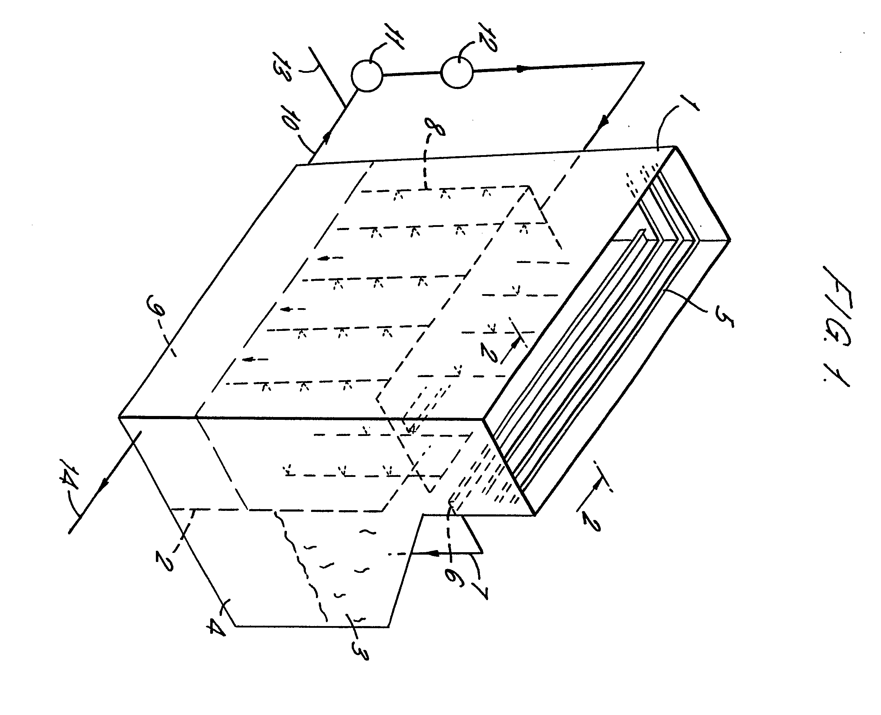

Figure 1 shows an apparatus for cleaning soil from articles comprising a cleaning chamber 1 adjacent which and separated from it by a baffle 2 is a reservoir 3. Reservoir 3 communicates with cleaning chamber 1 through the space between the top of the baffle 2 and the adjacent wall of the chamber.  Reservoir 3 contains a liquid mixture 4 which preferably comprises methylene chloride and methanol in substantially the azeotropic proportions of approximately 92.9% methylene chloride and 7.1% methanol. This liquid may however be more rich in methylene chloride than this.

In the top part of the cleaning chamber 1 are arranged condenser coils 5 through which a cold fluid such as water is passed.

Below the condenser coils 5 is a collector ledge 6 which runs around the entire internal periphery of the chamber below the condenser coils to collect liquid falling from the condenser coils.  Pipe 7 conducts liquid from the collector ledge 6 back into the reservoir 3.

Below the collector ledge 6 and in the main body of the chamber 1 is disposed a spray manifold 8 comprising a number of spray bars interconnected by liquid supply pipes not shown.

Means is provided in the chamber for supporting articles to be cleaned between the spray bars of the manifold 8.  Since this means for supporting the articles may be of a wholly standard nature it is not illustrated in the Figures.

Below the spray manifold in chamber 1 there is space for sprayed liquid to accumulate.  This clear space below the spray manifolds constitutes a sump 9.

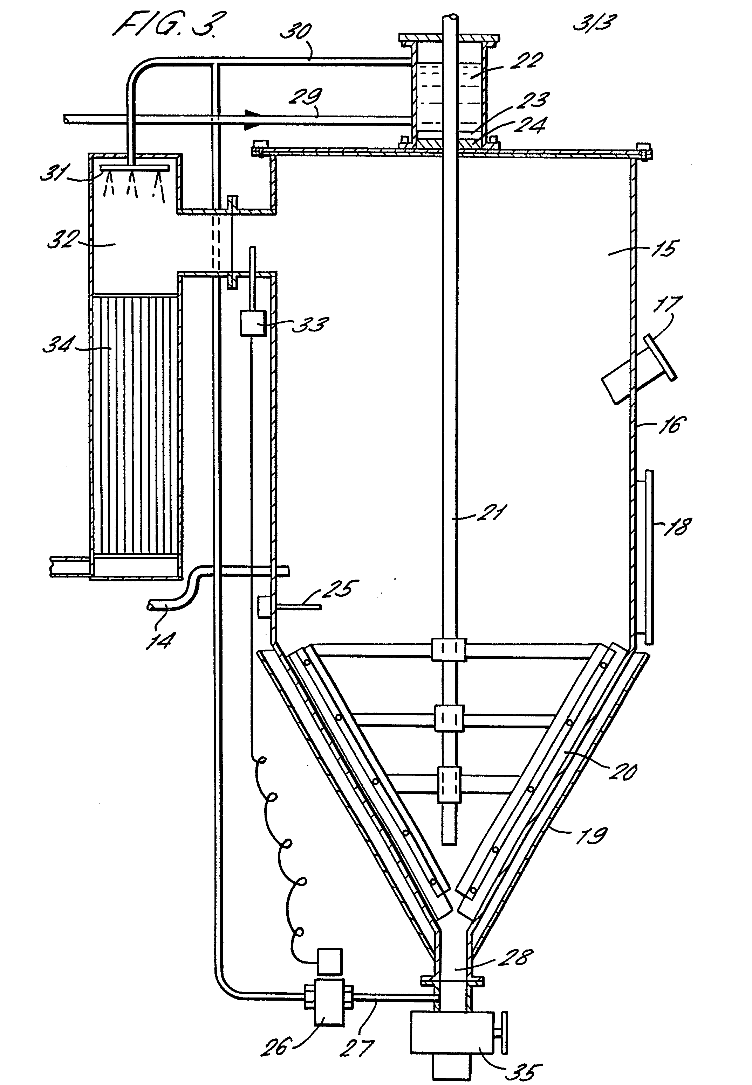

A supply pipe 10 leads from the sump 9 to a pump 11 which drives liquid from the sump through a filter 12 to the spray manifold 8. A further supply pipe 13 connects supply pipe 10 to a source of clean liquid for spraying. Suitable valves not shown are provided in supply pipes 13 and 10 for allowing pump 11 to draw supplies from either the clean liquid source or the sump 9. A pipe 14 leads from the sump 9 to the still shown in Figure 3.

In use, the liquid 4 in reservoir 3 is heated by heating means not shown so that it boils and vapour is given off which fills the chamber 1. The vapour of methylene chloride or of an azeotropic mixture of methylene chloride and methanol is much heavier than air and therefore tends to fill the chamber from the bottom up. When the vapour reaches the condenser coils 5 it is progressively condensed and returned to the reservoir 3 and the whole chamber is full of the non-inflammable vapour.

Articles to be cleaned may be lowered into the chamber and allowed to be heated by the vapour which will initially condense upon them until they reach the temperature of the vapour.

A methylene chloride/methanol mixture in sump 9 is also heated and thermostatically controlled to a temperature slightly lower than its boiling point, e.g. $5^{O}$C. below its boiling point.

Liquid from the sump 9 is then extracted by pump 11, which may be a centrifugal pump, pumped through filter 12 and sprayed from the spray bars of manifold 8 onto the articles to be cleaned.

This may be continued until the articles are sufficiently cleaned. The liquid which has been sprayed on the articles falls into the sump 9 and is therefore available for spraying once again. Because of this, the liquid in the sump 9 will gradually become contaminated with material removed from the articles being cleaned and when the cleaning operation is completed the articles will be covered with contaminated cleaning solution. In order to rinse the articles, they are allowed to drain for a short period, e.g. 2 to 3 minutes, and clean solvent is then drawn through pipe 13 by pump 11 and sprayed onto the articles. The clean solvent need not and generally will not be hot. After rinsing, the articles are preferably allowed to re-heat in the vapour until they reach equilibrium temperature before the lid of the apparatus is removed and the articles are withdrawn. As the articles pass through the vapour/air interface in the top of the apparatus they will dry.

An extraction duct may be located around the rim of the chamber 1 in order to collect any vapours which may escape past the condenser 5.

Automatic timing mechanisms may be used to execute each phase of the cleaning process automatically.

It is desirable that the liquid sprayed onto the articles be as hot as possible. It is necessary however that the liquid is sprayed as a liquid and not as a spray of vapour. As explained above, this latter fault will occur if the liquid is sprayed too hot since energy is added to the liquid by the pump and the liquid suffers a drop in pressure when it leaves each spray bar.

Also, the liquid in the sump should not be so hot that when the liquid reaches the pump it is liable to cause cavitation and lack of pumping action.

Provision may of course be made to cool liquid coming from the sump before it reaches the pump but since the liquid in this circulation path is contaminated with material from the articles being cleaned, it is desirable to keep the circulation path as simple as possible so that articles such as cooling coils will not become clogged with soil.

It is possible, but for the reason just explained not desirable, to boil liquid in the sump 9 to provide vapour in the chamber instead of having a separate reservoir 3 as shown in the drawings from which vapour may be generated. In order that the pump 11 would operate satisfactorily, it would be necessary to cool liquid being drawn from the sump 9 in which the liquid was being boiled and this would probably necessitate undesirable apparatus elements between the sump and the pump. The vapour produced by boiling liquid in the sump would still have a greater methylene chloride content than the liquid itself.

A particular advantage of using the separate reservoir 3 to contain the boiling liquid generating the blanketing vapour which excludes air from the apparatus and reduces the risk of fire is that the reservoir may contain a liquid which is the azeotropic mixture of methylene chloride and methanol or one richer in methylene chloride than that. Such a liquid may be boiled without risk of the liquid progressively boiling away and leaving a residue of inflammable methanol as could possibly happen if a liquid as rich in methanol as that needed for spraying and cleaning the articles were used for generating the vapour. There should of course be no substantial loss of volume from the vapour generating reservoir in normal use but if through some mischance there is a depletion of the liquid in the vapour generating reservoir in the apparatus shown this will not lead to a progressive increase in methanol concentration if the liquid in the reservoir is initially sufficiently methylene chloride rich.

The liquid in the sump 9 will become progressively more contaminated with soil from the articles being cleaned. In order to regenerate the liquid 9 and to provide fresh rinsing solvent, a still such as is illustrated in Figure 3 may be provided.

As shown in Figure 3, still 15 comprises a distillation chamber 16 provided with a viewing window 17 and an access door 18. Liquid in the still may be heated by passing hot water through water jacket 19. Solid material deposited from liquid in the still may be kept mobile by rotation of mica filled fibre scraper 20 which is driven for rotation by square shaft 21. Shaft 21 passes through a liquid seal 2 at the top of the still. The liquid seal may comprise a mixture of methylene chloride and methanol of approximately the same concentration as is used for spraying the articles to be cleaned. The liquid seal 22 is separated from the interior of the still by locking ring 23 and a tight tolerance PTFE seal 24.

Liquid supply pipe 14 connects the interior of the still to sump 9 of the cleaning apparatus. Level detecting switch 25 is provided to sense when level of the liquid in the still is sufficient at the start of a distillation cycle.

Solenoid valve 26 is located in a liquid supply pipe 27 which extends between an outlet of the still 28 at the base of the still and an outlet from the liquid seal 22. The liquid seal 22 is provided with a liquid inlet pipe 29 and a liquid outlet pipe 30 to which pipe 27 is joined. Pipe 30 is continued to supply a cascade head 31 situated at the top of a condenser 32. At the top end of the still 15 there is a connection port between the interior of the still and the interior of condenser 32. Adjacent the connection part between the still and the condenser is a thermostat 33. Condenser 32 comprises a number of water cooled condenser coils 34 over which vapour from the still and liquid from the cascade head 31 pass in use.

Finally, at the base of the still outlet 28 is provided with an outlet valve 35.

- 12 -

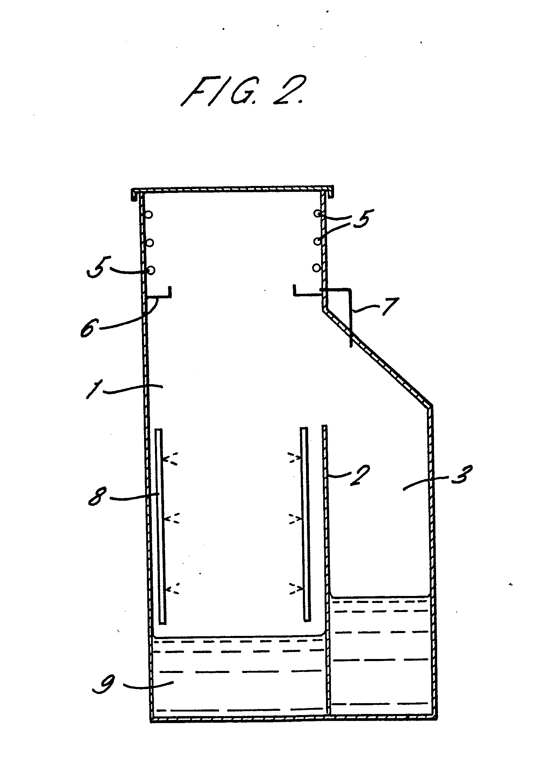

The manner in which the still may be operated in conjunction with the cleaning apparatus of the invention shown in Figures 1 and 2 is as follows:

At the commencement of a distillation cycle the still will be substantially empty. The distillation cycle will be commenced by contaminated cleaning liquid being drawn through supply pipe 14 from sump 9 into the still until level detector switch 25 is reached. Level detector switch 25 will then serve to actuate a valve not shown to halt the supply of liquid to the still.

Hot water flowing through the water jacket 9 will cause progressive distillation of vapour from the liquid in the still. Scraper 20 will be rotated to prevent the deposition of soiled material on the water jacket. The vapour which initially distills and fills the still will be substantially the azeotrope of methylene chloride and methanol which boils at about $40^{\circ}C$.

The vapour will pass through the port between the still and the condenser 32 and will be progressively condensed by the action of the condenser and taken to a storage vessel. From the storage vessel it will be available through pipe 13 for use as rinsing liquid in the cleaning apparatus.

Clean liquid from this storage vessel is passed through pipe 29 and liquid seal 22 and through pipe 30 to the cascade head 31, passes through the condenser and returns to the storage vessel along with material condensed from the still.

As distillation proceeds, the content of methanol in the liquid in the still will progressively rise until eventually the still contains sludge and methanol. The temperature of the vapour in the still will therefore progressively rise. Eventually, thermostat 33 will detect that the temperature of the vapour entering the condenser is substantially that of the boiling point of methanol. At this point, solenoid valve 26 will be activated so that clean liquid from the pipe 30 will be allowed to flood the bottom of the still. Because this clean liquid will contain a large volume percentage of methylene chloride there will be an instantaneous flashing off of vapour which will drive methanol vapour through the still clearing the content of methanol residual from the distillation into the condenser 32. It is to reduce any danger of combustion of this methanol rich vapour passing into the condenser 32 that the cascade head 31 is provided. The liquid coming from the cascade head being rich in methylene chloride serves to ensure that there is a methylene chloride rich atmosphere in the condenser at all times.

When a sufficient amount of liquid has been introduced through solenoid valve 26 it is shut and valve 35 is opened to dump from the still a small volume of liquid containing a high concentration of soil. The switching off of solenoid valve 26 is triggered by thermostat 33 detecting a fall in temperature of the vapour entering the condenser following the flushing through of the methanol vapour by the sudden rush of methylene chloride vapour through the still.

The cycle then recommences by introduction of liquid through supply pipe 14.

The apparatus and the process according to the invention have been bound to be particularly effective in removing materials such as are commonly used in printing inks such as gravure or flexographic inks as well as varnishes, polyurethane adhesives and vinyl heat seal lacquers. Among the materials which are efficiently removed by the process of the invention are nitrocellulose resins, acrylic resins, rubber latexes, vinyl chloride copolymer resins, alkyd amino resins, polysilanes, polyvinyl acetates, casein, polyvinylidene chloride, shellac and epoxy resins.

It has been found that these materials may be removed not only when they are soft and fresh but also when they have become hard and aged by being left on machine parts for considerable periods of time, e.g. six months. Naturally, the process of the invention is also applicable to removing materials other than printing inks and varnishes for instance, paints.

The following examples will illustrate the invention further.

Example 1   Effect of Spray Pressure

The sump (9) of apparatus described above was charged with a mixture of 17% methyl alcohol and 83% methylene chloride by weight. Ink trays from large gravure printing machines contaminated with either a nitrocellulose ink or an acrylic ink were lowered into the cleaning chamber 1.

The ink trays on large gravure printing machines are the reservoirs which hold the ink.  In general they are made of mild steel with brass or bronze castings used as bearing bosses and pump fittings.  The trays contain various other mild and stainless steel sheet fabrications which act as spreader blades, baffles, ink guides etc.

The inks used in these tests were formulated for use on aluminium and plastics food packaging.  The doctor blades which had been stripped from the trays were cleaned in the apparatus in a basket alongside the trays.  This was to allow full access of the spray to the surfaces to be cleaned.

The time taken to clean these parts of each type of ink at various spray pressures using a sump liquid temperature of 33°C are shown below in Table 1.

Table 1

| Spray Pressure KPa (psi) | Cleaning Times (Minutes) | | | |
|---|---|---|---|---|
| | Acrylic Ink | | Nitrocellulose Ink | |
| | Trays | Blades | Trays | Blades |
| 69 (10) | * | * | * | * |
| 138 (20) | 90 | 60 | 180 | 120 |
| 276 (40) | 20 | 5 | 45 | 20 |
| 414 (60) | 25 | 10 | 45 | 20 |
| 552 (80) | 90 | 60 | * | * |
| 690 (100) | * | * | * | * |

* = little cleaning achieved before test terminated

From this it can be seen that using the particular apparatus employed and the inks to be cleaned, higher pressures gave better cleaning until a pressure of 552 KPa produced some vaporisation of the cleaning liquid upon spraying.

The following examples show that such pressures can be employed at lower temperatures.

Example 2

Cleaning was carried out as in Example 1 but using a pressure of 276 KPa (40 psi) and various sump liquid temperatures. Table 2 shows the results

- 17 -

Table 2

| Temperature °C | Cleaning Times (Minutes) | | | |
|---|---|---|---|---|
| | Acrylic Ink | | Nitrocellulose Ink | |
| | Trays | Blades | Trays | Blades |
| 25 | * | 100 | * | 150 |
| 30 | 120 | 60 | 200 | 120 |
| 33 | 20 | 5 | 45 | 20 |
| 38 | * | * | * | * |

\* = little cleaning achieved

Example 3

Example 2 was repeated but using a pressure of 552 KPa (80 psi).

Table 3

| Temperature °C | Cleaning Times (Minutes) | | | |
|---|---|---|---|---|
| | Acrylic Ink | | Nitrocellulose Ink | |
| | Trays | Blades | Trays | Blades |
| 25 | 90 | 60 | 200 | 120 |
| 30 | 60 | 40 | 100 | 20 |
| 33 | 90 | 60 | * | * |
| 38 | * | * | * | * |

\* = little cleaning achieved

Example 4

Example 2 was repeated using a pressure of 690 KPa (100 psi)

Table 4

| Temperature °C | Cleaning Times (Minutes) | | | |
|---|---|---|---|---|
| | Acrylic Ink | | Nitrocellulose Ink | |
| | Trays | Blades | Trays | Blades |
| 25 | 60 | 40 | 100 | 20 |
| 30 | 90 | 60 | * | * |
| 33 | * | * | * | * |
| 38 | * | * | * | * |

* = little cleaning achieved

The effect of the composition of the cleaning liquid on cleaning efficiency is illustrated by the following example.

Example 5

Cleaning was carried out as in the previous examples using a pressure of 276 KPa and a sump temperature of 33°C. Various blends of methanol and methylene chloride were used as the sprayed liquid.

Table 5

| Cleaning Liquid | | Cleaning Time (Minutes) | | | |
|---|---|---|---|---|---|
| % Me OH | % CH$_2$ Cl$_2$ | Acrylic Ink | | Nitrocellulose Ink | |
| | | Trays | Blades | Trays | Blades |
| 5 | 95 | * | * | * | * |
| 10 | 90 | 180 | 100 | 280** | 200** |
| 15 | 85 | 35 | 10 | 80 | 50 |
| 17 | 83 | 20 | 5 | 45 | 20 |
| 20 | 80 | 180 | 100 | 250 | 150 |
| 25 | 75 | 280** | 200** | * | * |
| 30 | 70 | * | * | * | * |

* = little cleaning achieved
** = not properly clean

It can be seen that by a suitable choice of temperatures, spray pressure and cleaning liquid composition it is possible to remove modern printing ink soils from machine parts in a very short time. The optimum cleaning conditions are expected to depend upon the particular cleaning apparatus employed to some extent.

Further, it can be seen that spraying a methylene chloride/methanol mixture of the azeotrope composition of about 9% methanol is much less effective than the use in equivalent circumstances of a liquid containing at least 13% methanol.

CLAIMS

1. A process for cleaning soil from articles characterised in that the process comprises spraying the articles with a hot liquid comprising a mixture of methylene chloride and methanol having a methanol content of from 13% to 23% by weight whilst providing an atmosphere around the said articles of a non-inflammable vapour having a methylene chloride content greater than that of the spray liquid.

2. A process as claimed in claim 1, further characterised in that the atmosphere of vapour is generated from a first reservoir of liquid and the spray liquid is supplied from a second reservoir of liquid.

3. A process as claimed in claim 2, further characterised in that the liquid in the first reservoir is methylene chloride or a mixture of methylene chloride and methanol containing at least 92% by weight of methylene chloride.

4. A process as claimed in any preceding claim further characterised in that the sprayed liquid falls into a sump below the articles and is circulated from the sump to be further sprayed onto the articles.

5. A process as claimed in claim 4 further characterised in that the liquid in the sump is maintained hot but not boiling.

6. A process as claimed in any preceding claim further characterised in that the temperature of the liquid prior to spraying is from 25 to 35$^{o}$C and the liquid is sprayed at a pressure of from 414 to 212 KPa, the temperature and pressure being such that the spray produced is a liquid spray.

7. A process as claimed in any preceding claim further characterised in that the sprayed liquid comprises a mixture of methylene chloride and methanol containing from 14 to 17% by weight of methanol.

8. A process as claimed in any preceding claim further characterised in that the soil to be cleaned from the articles is printing ink.

9.    A process as claimed in claim 8 further characterised in that articles are parts of printing machines.

10.    A process as claimed in any one of the preceding claims wherein the temperature of the liquid prior to spraying is from 30 to $35^{\circ}$C, the liquid is sprayed at a pressure of from 310 KPa (45 psi) to 241 (KPa (35 psi), and the methanol content of the liquid is from 14 to 17% by weight.

11.    Apparatus for cleaning soil from articles which apparatus comprises a cleaning chamber (1) communicating with a first reservoir for liquid (3), means for heating liquid in the reservoir (39) to produce vapour in the cleaning chamber (1), means for supporting articles to be cleaned in the chamber, means (11,8) for spraying liquid onto articles so supported, a second reservoir (9) for liquid to be sprayed operatively connected to the said means for spraying (11,8), and means for heating liquid to be sprayed.

FIG. 1.

FIG. 2.

FIG. 3.

0085560

3/3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 881 949  (C.M. BROEK) <br> * Claims 1-2; example 1; column 4, line 66 - column 5, line 11 * | 1 | B 08 B  3/08 <br> C 23 G  5/02 <br> C 09 D  9/00 |
| A | US-A-3 957 531  (J.W. TIPPING et al.) <br> * Claims 1,2,3,4,6 * | 1 | |
| A | US-A-3 120 853  (T.J. KEARNEY) <br> * Whole document * | 1 | |

TECHNICAL FIELDS
SEARCHED (Int. Cl. ³)

B 08 B
C 23 G
C 09 D

The present search report has been drawn up for all claims

| Place of search | Date of completion of the search | Examiner |
|---|---|---|
| THE HAGUE | 04-05-1983 | DE ROECK R.G. |